(19) Europäisches Patentamt
European Patent Office
Office européen des brevets

(11) **EP 1 345 054 A1**

(12) **EUROPEAN PATENT APPLICATION**

(43) Date of publication:
**17.09.2003 Bulletin 2003/38**

(51) Int Cl.⁷: **G02B 6/34**

(21) Application number: **02251866.6**

(22) Date of filing: **15.03.2002**

| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Rhead, Philip Mark c/o Indigo Photonics Ltd.**<br>  **Birmingham B7 4BB (GB)**<br>• **Shu, Xuewen c/o Indigo Photonics Ltd.**<br>  **Birmingham B7 4BB (GB)** |
| --- | --- |
| (71) Applicant: **Aston Photonic Technologies Ltd.**<br>**Birmingham B7 4BB (GB)** | (74) Representative: **Chapman, Helga**<br>**Helga Chapman & Co.,**<br>**The Old Cottage**<br>**Mount Lane, Salisbury SP3 4AG (GB)** |

(54) **Tuneable optical fiber grating transmission filter**

(57)    A tuneable fibre grating transmission filter 10 comprising an optical fibre 12 including a grating section 14 in which a fibre Bragg grating 16 having one or more phase-shifts within its periodic refractive index variation, is provided, and tuning means, in the form of mechanical tuning apparatus 18, to which the grating section 14 is coupled. The tuning apparatus 18 is operable to apply a variable axial strain to the grating section 14 to thereby tune the wavelength of the grating 16. The fibre 12 may be optically coupled to a second fibre, including a second grating section in which a broadband transmission filter in the form of chirped fibre Bragg grating is provided. The chirped grating has a spectral profile including a pass band of substantially the same bandwidth and covering substantially the same wavelengths as the stop bands and the pass band of the phase-shifted grating 16.

Fig. 1

**Description**

The invention relates to a tuneable optical waveguide grating transmission filter.

Ultra-narrow bandwidth optical filters are required in telecommunications transmission systems which use the sideband modulated signal approach and in optical fibre grating based sensor systems. The optical filters most often used in these situations are Fabry-Perot (F-P) etalons, either in bulk-optic format or in optical fibre format. However, F-P etalons cannot provide the filter roll-off required to give good inter-channel distinction, and the attainable rejection level of an F-P etalon filter is limited by the optical coating on the cavity's reflective surfaces and by the flatness of the reflective surfaces. In addition, F-P etalon filters require the optical signal which is to be filtered to be launched from an input fibre into the F-P etalon cavity and then to be collected by an output fibre. There is therefore an associated insertion loss penalty, which can be made worse if there is any misalignment between the fibres.

An alternative known filter which has been used is based on long (10-15cm) fibre Bragg gratings. Although this type of filter can provide the required filter shape, their long length makes them difficult to tune quickly and difficult to package in a compact form. In addition, the long fibre Bragg grating filter must be used in reflection, necessitating the use of a fibre coupler or circulator, both of which introduce loss (6dB for a coupler and 1.5dB for a circulator).

While both the F-P etalon and the long fibre Bragg grating filters give good extinction, across a wide spectral range, outside their pass bands, this is not actually required for many applications in both telecoms and sensing. What is needed is an optical filter having a pass band of narrow bandwidth, with a steep roll-off and good extinction outside the pass band over a limited spectral bandwidth.

According to the present invention there is provided a tuneable optical waveguide grating transmission filter comprising:

an optical waveguide including a grating section within which an optical waveguide grating having a phase-shift within its periodic refractive index variation is provided,
the periodic refractive index variation giving the grating a spectral profile having a pass band located within a stop band; and
tuning means to which the grating section is coupled, the tuning means being operable to alter the periodicity of the grating, thereby producing a corresponding change in the wavelengths of the pass band and the stop band.

The optical waveguide is preferably an optical fibre. The optical waveguide grating is preferably a fibre grating, which may be a fibre Bragg grating or a long period fibre grating.

The optical waveguide grating may have a plurality of phase-shifts within its periodic refractive index variation, and most preferably has between 2 and 6 phase-shifts.

The tuning means preferably comprises mechanical tuning apparatus operable to apply an axial force to the grating section. The mechanical tuning apparatus may be athermalised. The mechanical tuning apparatus is preferably operable to apply an axial strain to the grating section.

The mechanical tuning apparatus may comprise:

first and second mounting members arranged in a spaced relationship to one another; and
a connecting member located between and attached to the first and second mounting members,
the first and second mounting members and the connecting member together defining a space across which part of the optical fibre, including the grating section, may be fixed, and
the length of the connecting member being variable to thereby alter the separation between the first and second mounting members, and thus change the magnitude of the axial strain applied to the grating section.

The connecting member is preferably a piezoelectric actuator. The mechanical tuning apparatus preferably further comprises an electronic control device operable to apply an appropriate voltage to the piezoelectric actuator in order to produce a desired change in the length of the piezoelectric actuator.

Desirably, one or more grooves for receiving a section of the optical fibre are provided on a surface of each of the first and second mounting members, the or each pair of grooves defining a substantially straight path for the part of the optical fibre containing the grating section. A plurality of grooves are preferably provided on the surface, the grooves being arranged in a spaced relationship, and substantially parallel, to one another. The grooves on the surface of the first mounting member preferably all extend to the side of the first mounting member to which the connecting member is attached.

The second mounting member preferably comprises a first part to which the connecting member is attached and a second part extending generally outwardly from the first part, the second part overlaying part of the connecting member and being non-uniform in length. The distal end of the second part may be angled. The grooves on the surface of the second mounting member desirably extend from the distal end of the second part at least to the plane corresponding to the end of the connecting member attached to the first part, thereby giving each groove a different length with respect to the said end of the connecting member. The or each groove is preferably generally V-shaped in cross-section.

A section of optical fibre is preferably fixed to the surfaces of the first and second mounting members using an adhesive, which may be a thermally curable adhesive, an ultra-violet light curable adhesive or a glass solder. Alternatively, the section of optical fibre may be metallised and a metal solder used to fix it to a mounting member.

The mechanical tuning apparatus may alternatively be operable to apply an axial compression to the grating section.

The tuning means may alternatively comprise thermal tuning apparatus operable to alter the temperature of the grating section.

The tuneable optical waveguide grating transmission filter may further comprise a second optical waveguide, optically coupled to the first optical waveguide, including a second grating section within which a second optical waveguide grating is provided, the second grating having a spectral profile including a pass band having substantially the same bandwidth and covering substantially the same wavelengths as the spectral profile of the first optical waveguide grating.

The second optical waveguide is preferably an optical fibre. The second optical waveguide grating is preferably a fibre Bragg grating, which is most preferably a chirped fibre Bragg grating having a pass band within its spectral profile. The second optical waveguide grating may alternatively be a long period grating having one or more phase-shifts within its periodic refractive index variation. The second optical waveguide grating may be athermalised, or may alternatively be mounted on the tuning means so that the wavelengths of both gratings are tuned by substantially the same amount, thereby maintaining their relationship with one another.

An embodiment of the invention will now be described in detail, by way of example only, with reference to the accompanying drawings, in which:

Figure 1 is a diagrammatic side view of a tuneable optical waveguide grating transmission filter according to the present invention;

Figure 2 is diagrammatic perspective view of the tuning means of the tuneable optical waveguide grating transmission filter of Fig. 1;

Figure 3 shows the spectral profile in transmission of a first fibre Bragg grating suitable for use in the tuneable optical waveguide transmission filter of Fig. 1;

Figure 4 shows the spectral profile in transmission of an alternative first fibre Bragg grating suitable for use in the tuneable optical waveguide transmission filter of Fig. 1;

Figure 5 shows the spectral profiles in transmission of the first fibre Bragg grating of Fig. 3 tuned to its minimum and maximum wavelengths;

Figure 6 shows the spectral profile in transmission of a second fibre Bragg grating suitable for use in the tuneable optical waveguide transmission filter according to the present invention;

Figure 7 shows the spectral profiles in transmission; and

Figure 8 shows the combined spectral profile of the of the alternative first fibre Bragg grating and the second fibre Bragg grating.

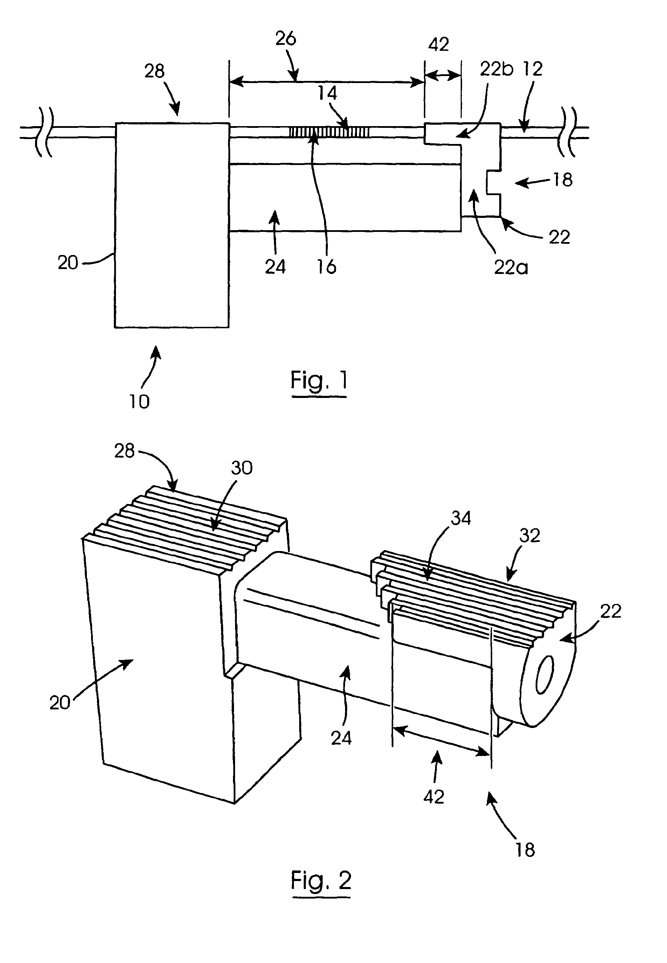

Referring initially to figures 1 and 2, the tuneable optical waveguide grating transmission filter 10 comprises an optical waveguide in the form of standard monomode optical fibre (SMF) 12 including a grating section 14 in which an optical waveguide grating, which in this example takes the form of a fibre Bragg grating (FBG) 16 having one or more phase-shifts within its periodic refractive index variation, is provided, and tuning means 18 to which the grating section 14 is coupled.

In this example the tuning means 18 comprises an athermalised mechanical tuning apparatus 18 operable to apply a variable axial strain to the grating section 14. The mechanical tuning apparatus 18 comprises a first mounting block 20 and second mounting block 22 arranged in a spaced relationship to one another, and a connecting member, which in this example takes the form of a piezoelectric actuator 24, located between the mounting blocks 20, 22. The mounting blocks 20, 22 and the piezoelectric actuator 24 together define a space 26 across which part of the optical fibre 12, including the grating section 14, is fixed.

The first mounting block 20 is made of Aluminium in this example, but it could alternatively be made of steel or a ceramic material. The surface 28 of first block 20 to which the fibre 12 is fixed has a set of V-section grooves 30 provided on it. The grooves 30 extend longitudinally across the surface 28 and are generally parallel to one another and to the longitudinal edges of the surface 28. The first mounting block 20 has a fixed position and it serves as a reference for both the mechanical tuning apparatus 18 and the athermalisation loop for the filter 10, as will be discussed in more detail below. The first mounting block 20 may also be used to attach the filter 10 to an external assembly.

The second mounting block 22 is made of Invar in this example. The choice of material for the second block 22 can be affected by one or more of the following: the choice of material for the first mounting block; the dimensions of both mounting blocks 20, 22; the separation distance 26 between the blocks; the type of piezoelectric actuator 24 used; and the type of optical fibre.

The second mounting block 22 comprises a first part 22a to which the piezoelectric actuator 24 is attached and a second part 22b extending generally outwardly from the first part 22a. The second part 22b overlies part of the piezoelectric actuator 24. The second part 22b is non-uniform in length, as shown in Fig. 2, with its distal end being angled. The surface 32 of the second block 22 to which the fibre 12 is fixed has a set of V-section grooves 34 provided on it. The grooves 34 extend longitudinally across the full length of the surface 32 and are generally parallel to one another and to the longitudinal edges of the surface 32. Because the distal end of the second part 22b of the second mounting block 22 is angled, each groove 34 therefore has a different length. However, it is not the total length of a V-groove 34 which is important, but its length 42 with respect to the end of the piezoelectric actuator 24 which is attached to the first part 22a of the second mounting block 22, as will be described in more detail below.

The second mounting block 22 can move relative to the first mounting block 20, under the action of the piezoelectric actuator 24, to thereby change the separation distance between the two mounting blocks 20, 22.

The grooves 30, 34 are of a depth and sectional shape suitable to receive the fibre 12 and to provide a good bonding surface for adhesive for fixing the fibre 12 to the mounting blocks 20, 22. In this example a UV curing adhesive is used.

In this example, the piezoelectric actuator 24 is a multilayer standard low voltage actuator having a high speed response (AE0505D16 from Tokin Corporation (Japan)). The dimensions (height x width x length) of the actuator 24 are 5mm x 5mm x 20mm. The length of the actuator 24 increases by approximately 17.4 $\Box$m when a dc voltage of 150 V is applied to it.

The piezoelectric actuator 24 is attached to the mounting blocks 20, 22 using a thermally curing epoxy based adhesive having a low thermal expansion coefficient (in this example Eccobond 285 material used with catalyst 11 or 28).

The grating 16 may be fabricated using known UV grating writing techniques, including the phase-mask fabrication technique and the two-beam holographic fabrication technique. The skilled person will be familiar with these fabrication techniques and so they will not be described in detail here. The number of phase-shifts within the periodic refractive index variation of the grating 16, and their locations, may be set during fabrication of the grating 16 and affect the spectral profile of the grating 16. In particular, the shape of the pass band can be controlled by appropriate selection of the number of phase-shifts.

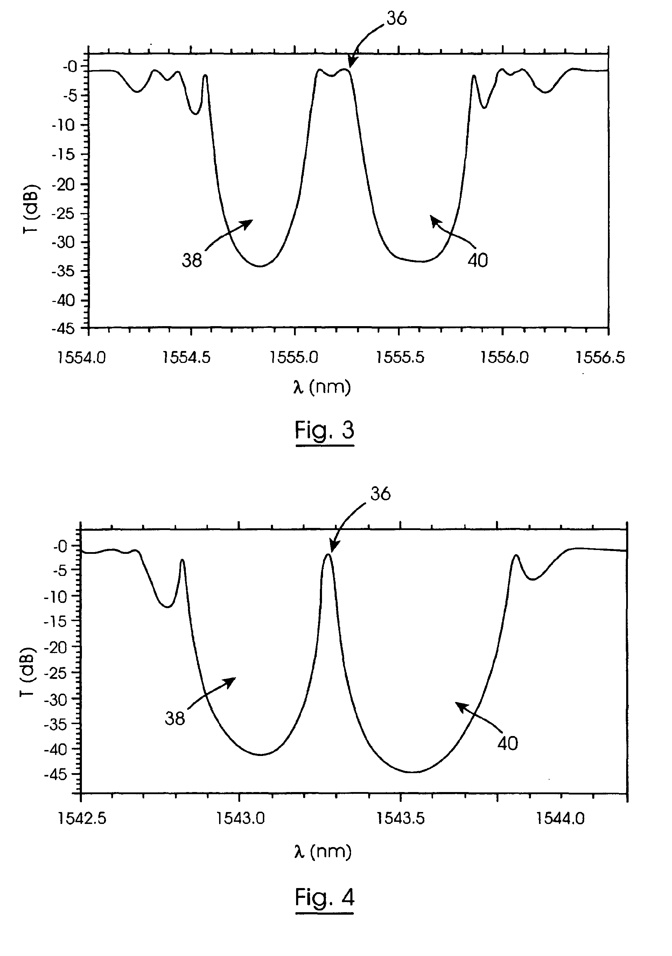

Figures 3 and 4 show the spectral profiles in transmission (T) of two gratings 16a, 16b respectively. The grating 16a having the spectral profile shown in Fig. 3 has a length of 5mm and four phase-shifts within its periodic refractive index variation and the grating 16b having the spectral profile shown in Fig. 4 has a length of 5mm and two phase-shifts within its periodic refractive index variation. Together with the length of the grating 16 and the grating strength, the number of phase-shifts determines the bandwidth and shape of the pass band 36 of the grating 16.

The key parameters for the grating 16 are: the bandwidth of the pass band 36; the insertion loss in the central transmission window; the suppression level of the stop bands 38, 40; the stop band bandwidth; and the edge slope of the pass band. The parameters of the grating 16a of Fig.3 are:

| Insertion loss | <0.1dB |
| --- | --- |
| Pass band bandwidth (at 0.5dB) | 19.3GHz |
| Pass band bandwidth (at 25dB) | 47.8GHz |
| Edge slope | 1.77dB/GHz |
| Stop band bandwidth ( at 25dB) | 38: 42GHz 40: 49.4GHz |

The parameters of the grating 16b of Fig. 4 are:

| Insertion loss | 0.93dB |
| --- | --- |
| Pass band bandwidth (at 3.0dB) | 3.75GHz |
| Pass band bandwidth (at 20dB) | 10.9GHz |
| Edge slope | 3.2dB/GHz |
| Stop band bandwidth (at 20dB) | 38: 45GHz 40: 59GHz |

As the skilled person will appreciate, the grating parameters are controllable during fabrication of the grating 16 and can be customised to suit different applications of the grating 16.

To fix the section of fibre 12 including the grating 16 to the mounting blocks 20, 22 the external coating on the fibre is removed from the sections of fibre which will be in contact with the surfaces 28, 32 of the mounting blocks 20, 22. Stripping the coating from the fibre 12 improves the bond between the fibre 12 and the adhesive, thereby allowing a higher strain to be applied to the grating 16. Adhesive is applied to the selected pair of V-grooves 30, 34 and the stripped fibre sections are lowered into the adhesive so that they are immersed in the adhesive. Before the adhesive is cured, stain is applied to the grating 16 so that the grating 16 is fixed to the mounting blocks 20, 22 under tension. The amount of strain applied to the grating 16 is selected so that when the piezoelectric actuator 24 is driven with a negative voltage and subjected to low temperatures the grating 16 will still be under some strain, and will therefore still be tuneable.

To ensure that the spectral response of the filter 10 does not change with temperature the amount of strain applied to the grating 16 must be kept constant. This can be done by keeping the separation distance between the two mounting blocks 20, 22 at a constant value, thereby maintaining a constant strain on the grating 16, by constructing the mechanical tuning apparatus 18 to have the same overall coefficient of thermal expansion (CTE) as the fibre 12, so that they both expand or contract by the same amount. The overall CTE of the mechanical tuning apparatus 18 is: (length of first mounting block 20 x CTE Aluminium) + (length of piezoelectric actuator x CTE piezoelectric material) + (length of first part 22a of second mounting block 22 x CTE Invar) - (length 42 of second part 22b of second mounting block 22 x CTE Invar). The overall CTE of the mechanical tuning apparatus can therefore be controlled by appropriate selection of the V-groove 34 on the second mounting block 22 to be used, since this will alter the length 42 of the second part 22b.

Alternatively, this can be done by making the mechanical tuning apparatus 18 athermalised and using the piezoelectric actuator 24 to alter the separation distance between the mounting blocks 20, 22 so that amount of strain applied to the grating 16 is kept constant.

In this example, the first mounting block 20 acts as the reference for the athermalisation loop of the filter 10. For an aluminium first mounting block 20, the second mounting block 22 is made of Invar to provide the correct thermal expansion coefficient, when the separation distance between the two mounting blocks 20, 22 is chosen correctly, to compensate for the thermal expansion coefficients of the fibre 12 and the piezoelectric actuator 24 and the strain effects associated with them. The change in the refractive index of the fibre due to the photoelastic coefficient must also be taken into consideration.

The following equation relates the change in the central wavelength ($\Box_1$) of the grating 16 per degree Celsius change in temperature (T) to the photoelastic coefficient ($p_e$) and the $CTE_f$ of the fibre 12, the CTE of the materials (m) that the mounting blocks 20, 22 are made of, the separation distance (x) between the mounting blocks 20, 22, and the rate of change of central (resonant) wavelength the grating with temperature

$$\left( \Delta\lambda \middle/ \Delta\mathrm{T} \right):$$

$$\Delta\lambda\,{}^{o}C^{-1} = \frac{\Delta\lambda}{\Delta\mathrm{T}} + \left(1 - p_e\right)\left( \frac{\left(CTE_{m1}\right)\left(L_{m1}\right)}{x} - \frac{\left(CTE_{m2}\right)\left(L_{m2}\right)}{x} + CTE_f \right)\lambda_1$$

where $L_{mn}$ is the length of mounting block n.

If the separation distance (x) between the two mounting blocks 20, 22 is changed to allow for a longer or shorter grating 16 to be used, then the length ($L_{m2}$) of the second mounting block 22 will need to be recalculated, or the material changed, to give the correct level of thermal compensation.

However, as mentioned above, the thermal path of each V-groove 34 on the second mounting block 22 is different. This allows the separation distance (x) to be altered, and the resulting level of athermalisation changed, without the need to remove and replace the second mounting block 22 with one of a different length. So the amount of athermalisation can be set by fixing the fibre 12 to the mounting blocks 20, 22 using the appropriate pair of V-grooves 30, 34. In this example separation distances of 10.3mm, 9.3mm and 8.3mm require the V-groove 34 on the second mounting block to have a length of 7.7mm, 8.7mm and 9.7mm respectively.

In this example, the wavelength of the grating 16 is tuned by changing the amount of axial strain which is applied to the grating 16, thereby changing the periodicity of the grating's refractive index variation. Here the grating 16 is fixed to the tuning means 18 under an initial strain, so the wavelength of the grating 16 can be increased by increasing the magnitude of the applied axial strain and decreased by decreasing the magnitude of the applied strain.

The magnitude of the applied axial strain is altered by changing the separation distance between the two mounting blocks 20, 22 i.e. by changing the length of the section of fibre 12, containing the grating 16, which is located between the two mounting blocks 20, 22. This is achieved by changing the length of the piezoelectric actuator 24 by applying an appropriate dc voltage to the actuator 24. When a dc voltage is applied to the piezoelectric actuator 24 the actuator expands proportionally to the applied voltage, due to the inverse piezoelectric effect. The change in the length of the actuator $(\Delta l_p)$ required to produce a $\Delta\lambda$ change in wavelength is given by

$$\Delta l_P \; \frac{x(\Delta\lambda)}{\lambda_1}$$

where x is the separation distance between the two mounting blocks 20, 22 and $\square$ is the central wavelength of the grating 16.

The piezoelectric actuator 24 is controlled by an electronic control module (not shown) operable to apply an appropriate voltage to the piezoelectric actuator 24 in order to produce the required change in its length. The control module is an open loop electronic amplifier operable to produce a dc output voltage of between -30V to + 150 V. The electronic circuitry within the control module is constructed from low noise electronic components in order to minimise random errors in the output voltage, which would cause corresponding random errors in the wavelength of the grating 16. The electronic components also have low thermal drift characteristics in order to prevent changes in the output voltage with changing temperature. The control module also includes temperature monitoring circuitry which enables the variation of output voltage with temperature to be calibrated, so that this can be corrected for during operation, to keep the output voltage constant and thereby maintain the wavelength of the grating 16.

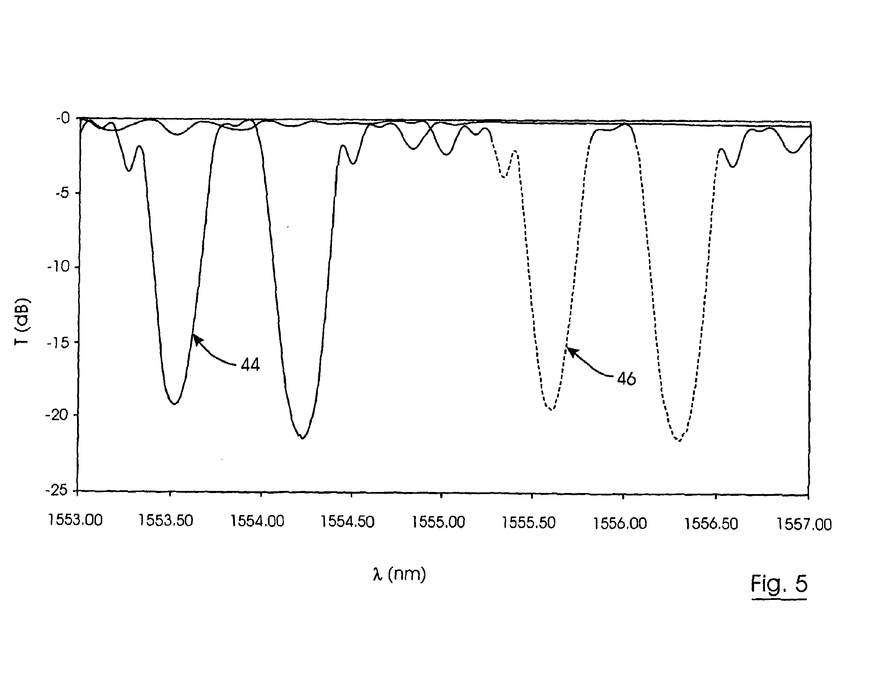

In this example the control module applies a dc output voltage in range -20 V to 105V to the piezoelectric actuator 24. Figure 5 shows the spectral profile 44, 46 of grating 16b tuned to the extremes (minimum and maximum respectively) of its tuning range (corresponding to piezoelectric actuator 24 drive voltages of -20V and 105V respectively).

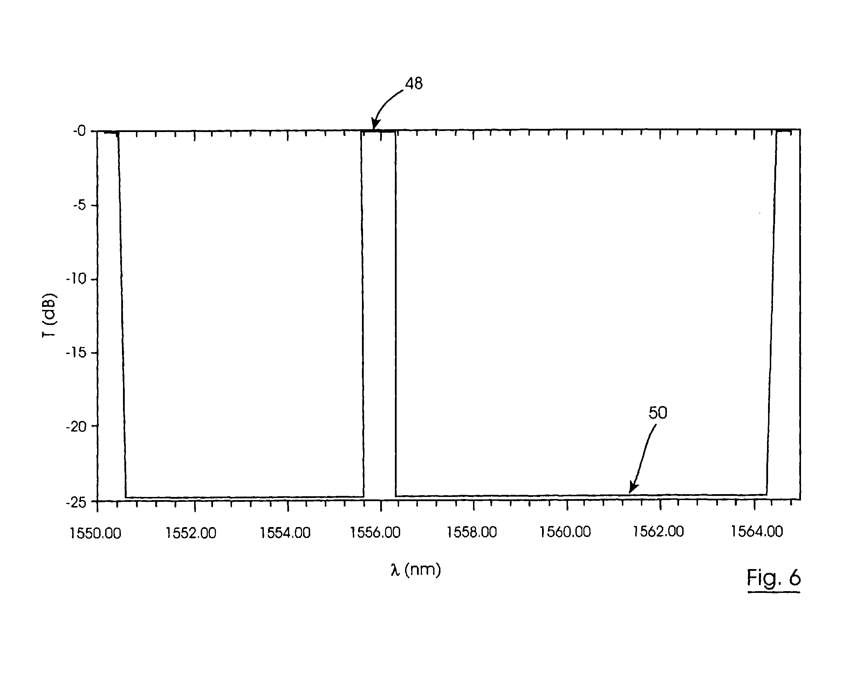

The fibre 12 containing the phase-shifted grating 16 can be optically coupled to a second optical waveguide, in the form of a second section of SMF, including a second grating section in which a second optical waveguide grating, which in this example takes the form of a second fibre Bragg grating, is provided. The second grating is a broadband transmission filter having a spectral profile including a pass band of substantially the same bandwidth and covering substantially the same wavelengths as the stop bands and the pass band of the phase-shifted grating 16. In this example the broadband grating takes the form of a chirped fibre Bragg grating having a spectral profile, in transmission (T), comprising a pass band 48 within a stop band 50, as shown in Fig. 6. The broadband grating is athermalised so that its spectral profile does not change with temperature.

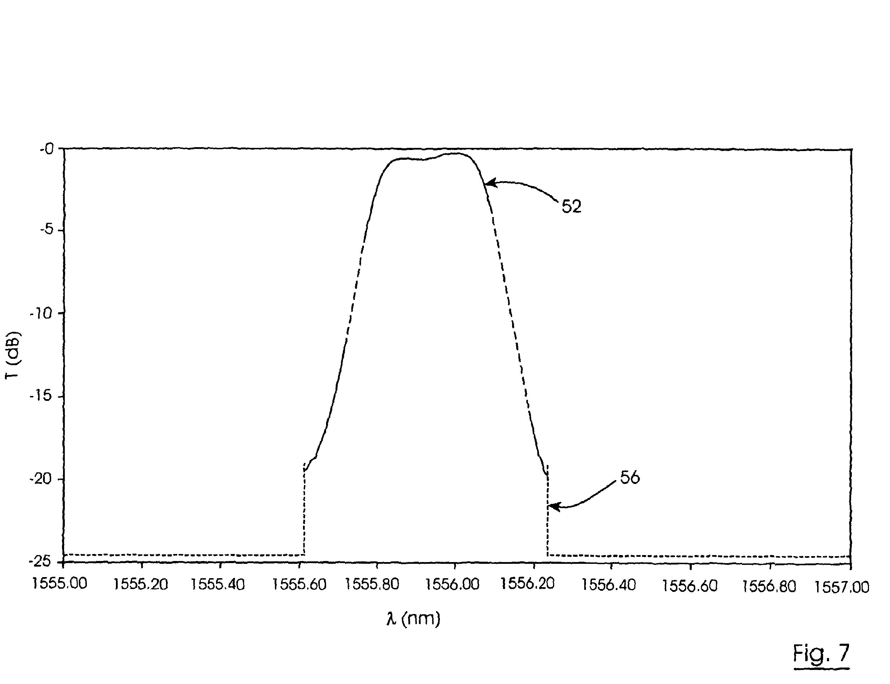

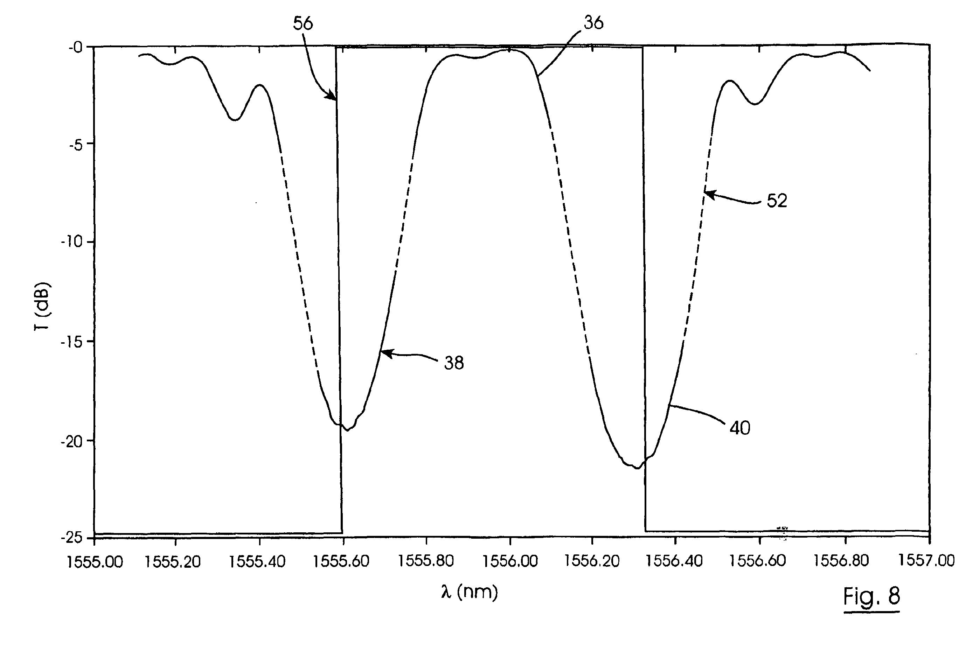

By optically coupling the phase-shifted grating 16 to the broadband grating the filter 10 is given a spectral profile which is a combination of the spectral profiles of the phase-shifted grating 16 and the broadband grating, as shown in Fig. 7. Fig. 8 shows the spectral profiles 52, 54 respectively, of the phase-shifted grating 16b, shown in Fig. 4, and of the broadband grating of Fig. 6 which combine to give the spectral profile shown in Fig. 7.

As can be seen in Fig. 8, the broadband grating transmits light at wavelengths corresponding to the pass band 36 and the stop bands 38, 40 of the phase-shifted grating 16b and stops (i.e. reflects) light at wavelengths outside the stop bands 38, 40. This means that the filter 10 will only transmit light at wavelengths falling within the pass band 36 of the phase-shifted grating 16b.

Because the phase-shifted grating 16 can be wavelength tuned, as described above, and the broadband grating is not tuneable, tuning the phase-shifted grating 16 causes its pass band 36 to appear to be tuneable within the pass band of the broadband grating.

The described embodiments of the present invention provide a tuneable optical fibre grating transmission filter having a narrow pass band with a steep roll-off and good extinction outside the pass band over a limited spectral bandwidth. The steepness of the rejection slope is controllable during fabrication of the phase-shifted grating by controlling the number and location of the phase shifts to give the required slope fall off and rejection levels.

The gratings used are short enough to be tuned using a low cost piezoelectric actuator. The gratings operate in transmission therefore the filter does not require a circulator or coupler, as a result of which the filter is not subject to the large losses associated with optical filters based on optical waveguide gratings operating in reflection. In addition, use of an optical waveguide grating in place of a Fabry-Perot etalon removes the insertion losses associated with, and offers an improved rejection level than is available with, that type of filter.

Various modifications may be made without departing from the scope of the present invention. A long period grating may be used in place of a fibre Bragg grating. The optical waveguide may comprise a different type of optical fibre, or may be a planar optical waveguide. The phase-shifted grating may have a different number of phase-shifts within its periodic refractive index variation, although generally between 1 and 10 phase-shifts will be used. The broadband transmission filter grating may have a different spectral profile than that shown, having a different bandwidth and wavelength range. The broadband transmission filter grating may alternatively be a phase-shifted long period grating (LPG).

Referring to the tuning means, a different number of grooves may be provided on each mounting block. A different type of piezoelectric actuator may be used in place of the one described, or a different form of connecting member may be used. The skilled person will appreciate that the tuning of the phase-shifted grating may alternatively be achieved by the application of an axial compression force to the grating, and that tuning by the application of an axial force may be replaced by temperature tuning achieved by altering the temperature of the grating. Rather than being athermalised the broad band grating may be mounted on the tuning means along with the phase-shifted grating so that they are both wavelength tuned, their spectral profiles retaining their original relationship with one another rather than moving with respect to one another, as described above.

## Claims

1. A tuneable optical waveguide grating transmission filter 10 **characterised by** comprising:

   an optical waveguide 12 including a grating section 14 within which an optical waveguide grating 16 having a phase-shift within its periodic refractive index variation is provided,
   the periodic refractive index variation giving the grating 16 a spectral profile having a pass band 36 located within a stop band 38,40 ; and
   tuning means 18 to which the grating section 14 is coupled, the tuning means being operable to alter the periodicity of the grating 16, thereby producing a corresponding change in the wavelengths of the pass band 36 and the stop band 38,40.

2. A filter as claimed in claim 1, wherein the optical waveguide is an optical fibre 12 and the optical waveguide grating is a fibre grating 16, such as a fibre Bragg grating or a long period fibre grating.

3. A filter as claimed in any preceding claim, wherein the optical waveguide grating 16 has a plurality of phase-shifts within its periodic refractive index variation.

4. A filter as claimed in any preceding claim, wherein the tuning means comprises mechanical tuning apparatus 18 operable to apply an axial force to the grating section 14.

5. A filter as claimed in claim 4, wherein the mechanical tuning 18 comprises:

   first and second mounting members 20, 22 arranged in a spaced relationship to one another; and
   a connecting member 24 located between and attached to the first and second mounting members 20, 22,
   the first and second mounting members 20, 22 and the connecting member 24 together defining a space 26 across which part of the optical fibre 12, including the grating section 14, may be fixed, and
   the length of the connecting member 24 being variable to thereby alter the separation between the first and second mounting members 20, 22, and thus change the magnitude of the axial strain applied to the grating section 14.

6. A filter as claimed in claim 5, wherein one or more grooves 30, 34 for receiving a section of the optical fibre 12 are provided on a surface 28, 32 of each of the first and second mounting members 20, 22, the or each pair of grooves 30, 34 defining a substantially straight path for the part of the optical fibre 12 containing the grating section 14.

7. A filter as claimed in claims 5 or 6, wherein the second mounting member 22 comprises a first part 22a to which the connecting member 24 is attached and a second part 22b extending generally outwardly from the first part 22a, the second part 22a overlaying part of the connecting member 24 and being non-uniform in length, the grooves 34 on the surface 32 of the second mounting member 22 extending from the distal end of the second part 22b at least to the plane corresponding to the end of the connecting member 24 attached to the first part 22a, thereby giving each groove 34 a different length with respect to the said end of the connecting member 24.

8. A filter as claimed in any of claims 1 to 3, wherein the tuning means 18 comprises thermal tuning apparatus operable to alter the temperature of the grating section.

9.  A filter as claimed in any preceding claim, wherein the tuneable optical waveguide grating transmission filter 10 further comprises a second optical waveguide, optically coupled to the first optical waveguide 12, including a second grating section within which a second optical waveguide grating is provided, the second grating having a spectral profile including a pass band 48 having substantially the same bandwidth and covering substantially the same wavelengths as the spectral profile of the first optical waveguide grating 16.

10. A filter as claimed in claim 11, wherein the second optical waveguide is an optical fibre and the second optical waveguide grating is a fibre Bragg grating, which may be a chirped fibre Bragg grating having a pass band 48 within its spectral profile or a long period grating having one or more phase-shifts within its periodic refractive index variation.

Fig. 1

Fig. 2

Fig. 3

Fig. 4

Fig. 5

Fig. 6

Fig. 7

Fig. 8

| | European Patent Office | EUROPEAN SEARCH REPORT | Application Number EP 02 25 1866 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | XU M G ET AL: "Tunable fibre bandpass filter based on a linearly chirped fibre Bragg grating for wavelength demultiplexing" ELECTRONICS LETTERS, IEE STEVENAGE, GB, vol. 32, no. 20, 26 September 1996 (1996-09-26), pages 1918-1919, XP006005748 ISSN: 0013-5194 * the whole document * | 1-4,9,10 | G02B6/34 |
| X | US 6 154 590 A (JIN SUNGHO ET AL) 28 November 2000 (2000-11-28) * abstract; figures 5,9,10 * * column 2, line 4 - column 3, line 15 * * column 8, line 28 - column 9, line 4 * | 1-4 | |
| A | LEISCHING P ET AL: "Optical add/drop multiplexer for dynamic channel routing" ELECTRONICS LETTERS, IEE STEVENAGE, GB, vol. 35, no. 7, 1 April 1999 (1999-04-01), pages 591-592, XP006011998 ISSN: 0013-5194 * the whole document * | 1,2,8 | TECHNICAL FIELDS SEARCHED (Int.Cl.7) G02B |
| A | US 5 987 200 A (LEMAIRE PAUL JOSEPH ET AL) 16 November 1999 (1999-11-16) * abstract; figures 5-7 * | 1,8 | |
| A | US 2001/021294 A1 (PENG JIANGDE ET AL) 13 September 2001 (2001-09-13) * abstract; figures 1-5 * | 1 | |

-/--

The present search report has been drawn up for all claims

| Place of search | Date of completion of the search | Examiner |
|---|---|---|
| THE HAGUE | 29 August 2002 | Faderl, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 02 25 1866

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | RICHTER A ET AL: "Passive temperature compensation of piezo-tunable fibre Bragg gratings" ELECTRONICS LETTERS, IEE STEVENAGE, GB, vol. 35, no. 15, 22 July 1999 (1999-07-22), pages 1269-1271, XP006012459 ISSN: 0013-5194 * the whole document * | 1-10 | |
| A | DE 199 39 103 C (SIEMENS AG) 16 November 2000 (2000-11-16) * abstract; figure 1 * * column 1 - column 2 * | 9 | |
| A | US 6 097 861 A (KIM KYONG HON ET AL) 1 August 2000 (2000-08-01) * abstract; figure 3A * | 1 | |

TECHNICAL FIELDS SEARCHED (Int.Cl.7)

The present search report has been drawn up for all claims

| Place of search | Date of completion of the search | Examiner |
|---|---|---|
| THE HAGUE | 29 August 2002 | Faderl, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 02 25 1866

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2002

| Patent document cited in search report | | Publication date | Patent family member(s) | | Publication date |
|---|---|---|---|---|---|
| US 6154590 | A | 28-11-2000 | NONE | | |
| US 5987200 | A | 16-11-1999 | NONE | | |
| US 2001021294 | A1 | 13-09-2001 | US | 6330383 B1 | 11-12-2001 |
| | | | US | 5982963 A | 09-11-1999 |
| | | | AU | 5265500 A | 14-09-2000 |
| | | | EP | 1177470 A1 | 06-02-2002 |
| | | | WO | 0050944 A1 | 31-08-2000 |
| | | | AU | 747593 B2 | 16-05-2002 |
| | | | AU | 2086899 A | 05-07-1999 |
| | | | BR | 9813627 A | 21-11-2000 |
| | | | CA | 2314106 A1 | 24-06-1999 |
| | | | CN | 1283278 T | 07-02-2001 |
| | | | EP | 1040377 A1 | 04-10-2000 |
| | | | JP | 2002508534 T | 19-03-2002 |
| | | | TR | 200001735 T2 | 21-11-2000 |
| | | | WO | 9931537 A1 | 24-06-1999 |
| DE 19939103 | C | 16-11-2000 | DE | 19939103 C1 | 16-11-2000 |
| | | | WO | 0113071 A1 | 22-02-2001 |
| US 6097861 | A | 01-08-2000 | KR | 258183 B1 | 01-06-2000 |

For more details about this annex : see Official Journal of the European Patent Office, No. 12/82